# EUROPEAN PATENT APPLICATION

(11) **EP 4 556 965 A1**
(43) Date of publication of application: **21.05.2025**
(21) Application number: 24211527.7
(22) Date of filing: 07.11.2024
(51) Int. Cl.: G02B 5/04, G02C 7/14, H04M 1/02

(54) **A FILM APPLICABLE TO A SCREEN**

(30) Priority: 14.11.2023 IT 202300024054
(71) Applicant: Lorenzoni, Elio, 25081 Brescia BS (IT)
(72) Inventor: Lorenzoni, Elio, 25081 Brescia BS (IT)
(74) Representative: Trentin, Michele

(57) **Abstract**

A film applicable to a screen of an electronic device to allow a user with a visual defect to correctly view what is reproduced on the screen. The film **(1)** is multilayer comprising a first layer **(2)** of adhesion to the screen and a second layer **(4)** of protection facing the user and a third layer **(5)** interposed between the first layer **(2)** and the second layer **(4)** and having a plurality of prismatic microcells **(7)** having dioptric and/or prismatic power calculated in relation to a visual defect of the user and the envisaged distance between the screen and the user.

## Description

### Field of application

The present invention is applicable to the optical field and relates to devices having customized refractive power capabilities.

In more detail, the present invention relates to films for screens having customized refractive power capabilities.

### State of the art

Electronic devices such as smartphones, tablets, personal computers, televisions are used in everyday life, both for leisure in free time and for the performance of one's work duties.

It is known that, over the course of people's lives, the visual capability of each subject changes. In fact, during growth users often become myopic and, vice versa, with increasing age users become presbyopic, that is, they cannot focus their vision on closer objects. To cope with the aforesaid refractive defects, eyeglasses with the appropriate gradations are worn. However, such glasses are often uncomfortable, especially when the wearer is presbyopic. In fact, the use of presbyopic glasses is particularly disadvantageous especially with reference to the use of smartphones and personal computers, whose use in recent decades is a priority and increasingly frequent. Moreover, it is also known that with glasses to correct presbyopia, the users do not see objects farther away and must therefore continuously put on and take off their eyeglasses.

To overcome such drawbacks, screens are known to be mounted directly on the smartphone, tablet or TV which, by means of the aid of special software, make the image sharper for users with refractive defects.

However, the aforesaid screens are particularly expensive.

Moreover, they must be mounted during the assembly of the electronic device by a person skilled in the art, with consequent expense of time and further money.

And there is more. In the event of modifications in the user's visual defect which, as is known, can worsen over the years, the adaptation of the screens of the prior art is laborious, as an expert must intervene, adapting the software present in the electronic device.

### Presentation of the invention

The object of the present invention is to at least partially overcome the drawbacks highlighted above by providing a film applicable to a screen of an electronic device which allows visually impaired users to correctly view what is reproduced on the screen.

In particular, an object of the present invention is to provide a film allowing visually impaired users to correctly view the screen of their electronic device without the aid of eyeglasses or contact lenses.

Moreover, another object of the present invention is to provide a film applicable to a screen of an electronic device which is customizable according to the visual defect of the user.

And there is more. A further object of the present invention is to provide a film which can be applied to any screen of any electronic device.

Further, another object of the present invention is to provide a film easily applicable and replaceable by the user.

It follows that a further object of the present invention is to provide a film which allows time savings and, consequently, cost savings with respect to what occurs in the prior art.

Said objects, as well as others which will become clearer below, are achieved by a film applicable to a screen of at least one electronic device in accordance with the following claims, which are to be considered an integral part of the present patent.

In particular, the film is, as anticipated, applicable to a screen of at least one electronic device. To this end, according to an aspect of the invention it is multilayer and comprises at least a first layer of adhesion to the screen.

Advantageously, the presence of the first adhesion layer allows quick and easy installation by the user. Likewise, the film is easily removable from the screen by simply lifting a corner thereof.

Moreover, what has been said still advantageously allows considerable savings in costs and time for the replacement of the film with respect to the screens of the prior art.

According to another aspect of the invention, the film further comprises at least a second protection layer facing the user.

Advantageously, the presence of the second protection layer allows protecting the screen of the electronic device from scratches and bumps.

It follows, still advantageously, that the second protection layer allows saving the costs of a further protection film of the screen itself.

According to another aspect of the invention, the film further comprises at least a third layer interposed between the first layer and the second layer.

In more detail, according to a further aspect of the invention the third layer comprises a plurality of prismatic microcells having dioptric and/or prismatic power calculated in relation to at least the visual defect of the user and the distance envisaged between the screen and the user.

Advantageously, the presence of the third layer allows the visually impaired user to clearly see what is reproduced on the screen without the need to wear eyeglasses or contact lenses.

Moreover, still advantageously, what has been said above allows the film of the invention to be customized according to the visual defect of the user.

### Brief description of the drawings

Further characteristics and advantages of the invention will become more apparent in the light of the detailed description of a preferred, but not exclusive, embodiment of a film applicable to a screen of at least one electronic device to allow the correct view of what is reproduced on the screen by at least a user with at least one visual defect according to the invention, illustrated by way of nonlimiting example with the aid of the appended drawing table in which:

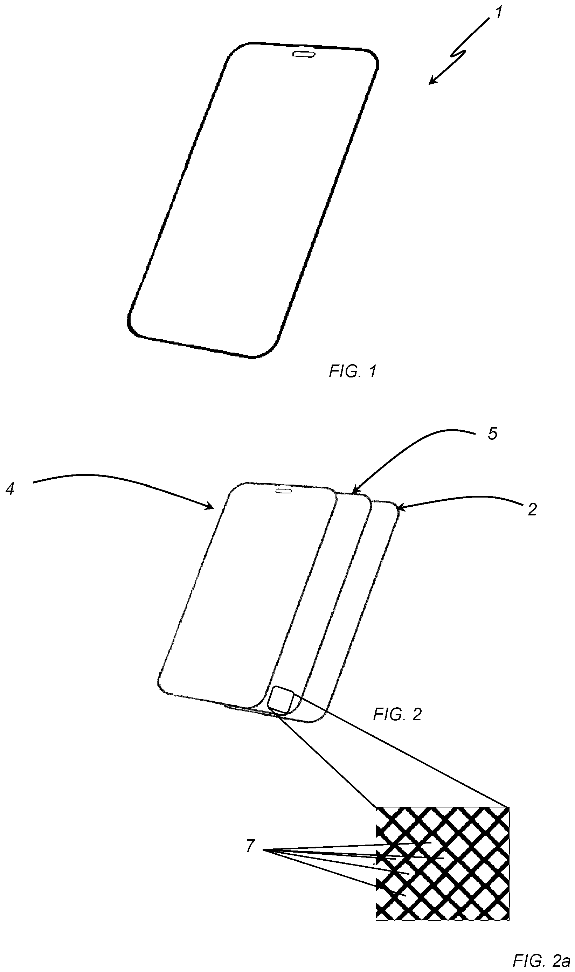

FIG. 1 depicts a perspective view of a film applicable to a screen according to the invention;
FIG. 2 depicts the film applicable to a screen of Fig. 1 in exploded view;
FIG. 2a depicts a detail of the film of Fig. 1.

### Detailed description of some preferred embodiments

With reference to the aforementioned figures, a film **1** is disclosed which, like other films of the prior art, is applicable to a screen of an electronic device. Obviously, it can be any electronic device, without any limit for the present invention. In fact, the film **1** is adapted to be applied to the screen of smartphones, tablets, personal computers, televisions and the like, as it can be produced for all brands and models of electronic devices on the market.

According to an aspect of the invention, the film **1** is multilayer and comprises a first layer **2** of adhesion to the screen. In more detail, according to another aspect of the invention, the first adhesion layer **2** comprises a glue. Obviously, as occurs with the protective films of screens of the prior art, the glue is of such a type whereby the film is easily removable from the screen of the electronic device without leaving traces of dirt on the screen itself.

However, the presence of the glue is not to be considered a limiting characteristic for different embodiments of the invention. In fact, according to an embodiment variant not depicted herein, the first adhesion layer is made of hydrogel.

Regardless of the method of adhering the first layer **2** to the screen, it is clear that, advantageously, the presence of the first layer **2** makes the film **1** versatile and easily applicable by the user. In fact, in the application of the film **1,** the user is autonomous and does not need a person skilled in the art as instead occurs with the customizable screens of the prior art which must be installed by a person skilled in the art when assembling the electronic device.

Likewise as anticipated, the film **1** is, still advantageously, easily removable from the screen of the electronic device, thereby making the film **1** easily replaceable.

It follows that the above allows the user to easily replace the film **1** of the invention as needed.

Moreover, this still advantageously allows a considerable saving in costs and time for the replacement of the film **1.**

With particular reference to the embodiment variant according to which the first adhesion layer is made of hydrogel, it should be noted that such a material makes the coupling of the film with the screen of the electronic device particularly advantageous.

In fact, the fact that the first layer is made of hydrogel allows coupling to the screen without the aid of glue, as it allows a perfect adhesion, eliminating all bubbles and/or air pockets that should be created between the screen and the first layer.

It follows that this advantageously allows the film not to detach from the screen except by means of voluntary lifting by the user.

In the embodiment variant disclosed so far, only the first layer of the film is made of hydrogel. However, this does not mean that according to other embodiment variants of the invention all the layers of the film are made of hydrogel.

Advantageously, this makes the film of the invention particularly flexible and adaptable to the screen of the electronic device.

From what has been said, it is clear that the construction material of the film **1** in general is not limiting for the invention, as it can be any material.

According to another aspect of the invention, the film **1** also comprises a second layer **4** of protection facing the user.

Advantageously, the presence of the second protection layer **4** precisely allows protecting the film **1,** and therewith the screen of the electronic device, from scratches and bumps.

From this it follows, still advantageously, that a longer duration of the film **1** and the electronic device over time is allowed.

According to another aspect of the invention, the second layer **4** is anti-reflective.

Advantageously, the fact that the second layer **4** is anti-reflective allows reducing the reflections of light that typically hinder the correct viewing of the images.

As a result, the visibility of the images reproduced on the screen can be improved.

Still advantageously, this allows using the electronic device provided with the film **1** of the invention even in particularly bright places.

However, what has been said is not to be considered a limiting characteristic of the invention.

In fact, according to an embodiment variant not depicted herein, the film comprises a fourth anti-reflective layer placed above the second cover layer and facing the user.

According to another aspect of the invention, the film **1** further comprises a third layer **5** interposed between the first layer **2** and the second layer **4.** In more detail, according to a further aspect of the invention the third layer **5** comprises a plurality of prismatic microcells **7** having dioptric and/or prismatic power calculated in relation to the visual defect of the user and the distance envisaged between the screen and the user himself/herself.

In particular, typically, although not necessarily, at least one microcell of the plurality of prismatic microcells **7** has a dioptric and/or prismatic power different from one or more adjacent microcells **7.**

Thereby, advantageously, it is possible to make each microcell **7** have a dioptric and/or prismatic power in accordance with the physiological conformation of the eye of the user intended to use the film **1** of the invention.

It follows, still advantageously, that what has been said above allows the film **1** of the invention to be customized to the user's visual defect.

This makes it possible, still advantageously, to make the user's visual perception consistent.

As a result, still advantageously, the user will be able to relax the muscles of the eye, as he/she does not strain to view the screen of his/her electronic device.

It is clear that one of the consequences, still advantageously, is the improvement of the user's general physical conditions thanks to the relaxation or in any case to the better muscle and nerve management of the eyeballs.

It follows, still advantageously, that the presence of the third layer **5** allows the visually impaired user to clearly see what is displayed on the screen without the need to use eyeglasses.

Still advantageously, this allows the user to further save costs due to the purchase of eyeglasses or contact lenses.

From what has been said so far, what emerges is that the film **1** of the invention has a third layer **5** shaped to adapt what is reproduced on the screen to the user's visual defects also according to the distance envisaged between the user and the screen. Such an adaptation can be specifically customized on the user, as it is made in standardized degrees, such as occurs for eyeglasses which can be made customized or purchased in predetermined degrees in pharmacies or similar stores.

Moreover, still advantageously, since it is known that the same user notes his/her refractive defects change over time (typically in a pejorative sense, but sometimes also in an ameliorative sense following appropriate generally surgical treatments), the fact of being able to easily remove the film **1** in order to be able to place a new film **1** on the screen adapted to the user's new visual situation makes the film **1** which is the subject matter of the present invention particularly advantageous both economically and in its operation.

Moreover, the presence of the second protection layer **4** of the third layer **5** advantageously allows the latter to be made of less noble and, consequently, less expensive materials. In fact, still advantageously, the third layer **5** thereby does not have to be shaped so as to be able to resist impacts and rubbing.

Operationally, the visually impaired user, such as typically with presbyopia but not only, once the extent of their defect is known, purchases the film **1** of the invention suitable for the brand and model of the electronic device to which it must be coupled and having a dioptric and/or prismatic power suited to his/her refractive defect. Next, he/she removes the thin protective sheet which, as typically occurs in protective films of screens, is coupled to the first adhesion layer **2** to keep it clean from dust or other agents which could compromise the adhesion of the film **1** to the screen. Once the protective sheet is removed, the user couples the film **1** of the invention to the screen of their electronic device. Thereby, advantageously, the user can correctly focus the content reproduced on the screen of his/her electronic device without the aid of eyeglasses or contact lenses.

In light of the foregoing, it is evident that the film applicable to a screen of at least one electronic device of the invention achieves all of its intended purposes.

In particular, it allows a visually impaired user to correctly view what is reproduced on the screen.

As a result, it allows the visually impaired user to view the screen of their electronic device correctly without the aid of eyeglasses or contact lenses.

Moreover, the film applicable to a screen of an electronic device of the invention can be customized according to the user's visual defect.

And there is more. The film of the invention can be applied to any screen of any electronic device.

Moreover, it is easily applicable and replaceable by the user.

It follows that the film of the screen allows savings in time and, consequently, costs with respect to what occurs in the prior art.

The invention is subject to numerous modifications and variations, all falling within the appended claims. Moreover, all the details may furthermore be replaced by other technically equivalent elements, and the materials may be different if required, without departing from the scope of protection of the invention defined by the appended claims.

## Claims

1. A film applicable to a screen of at least one electronic device to allow at least one user with at least one visual defect to correctly view what is reproduced on the screen,
said film **(1)** being **characterized in that** it is multilayer comprising at least a first layer **(2)** of adhesion to the screen and at least a second layer **(4)** of protection facing the user, said film **(1)** also comprising at least a third layer **(5)** interposed between said at least a first layer **(2)** and said at least a second layer **(4)** and having a plurality of prismatic microcells **(7)** having dioptric and/or prismatic power calculated in relation to at least the visual defect of the user and the distance envisaged between the screen and the user.

2. Film applicable to a screen according to claim 1, **characterized in that** at least one microcell **(7)** of said plurality of microcells **(7)** has a dioptric and/or prismatic power different from at least one microcell **(7)** adjacent thereto.

3. Film applicable to a screen according to claim 1 or 2, **characterized in that** said at least a first adhesion layer **(2)** comprises a glue.

4. Film applicable to a screen according to one or more of the preceding claims, **characterized in that** at least said at least a first adhesion layer **(2)** is made of hydrogel.

5. Film applicable to a screen according to one or more of the preceding claims, **characterized in that** said at least a second layer **(4)** is anti-reflective.
